# EUROPÄISCHE PATENTANMELDUNG

(11) **EP 4 744 921 A1**
(43) Veröffentlichungstag der Anmeldung: **20.05.2026**
(21) Anmeldenummer: 25213876.3
(22) Anmeldetag: 06.11.2025
(51) Int. Cl.: B60J 10/265, B60J 10/36, B60J 10/84, B60R 13/04

(54) **DICHTUNGSANORDNUNG UND VERKLEIDUNGSELEMENT**

(30) Priorität: 19.11.2024 DE 102024133951
(71) Anmelder: CQLT SaarGummi Technologies S.à.r.l., 5544 Remich (LU)
(72) Erfinder: Grüter, Achim, 66780 Rehlingen-Siersburg (DE); Laux, Timo, 66809 Nalbach (DE); Thiel, Daniel, 66701 Beckingen-Oppen (DE); Thome, Martin, 66839 Schmelz-Limbach (DE)
(74) Vertreter: Patentanwälte Bernhardt / Wolff Partnerschaft mbB

(57) **Zusammenfassung**

Die Erfindung betrifft eine Dichtungsanordnung (1) für ein Kraftfahrzeug umfassend eine bewegliche Fensterscheibe (2) und ein an einer Fahrzeugkarosserie (3) befestigtes Verkleidungselement (4). Um eine besonders zuverlässige und optisch ansprechende Abdichtung zu ermöglichen, umfasst das Verkleidungselement (4) ein Dichtungselement (5), welches zur dichtenden Anlage an einer oberen Kante der beweglichen Fensterscheibe (2) ausgebildet ist.

## Beschreibung

Die Erfindung betrifft eine Dichtungsanordnung für ein Kraftfahrzeug nach dem Oberbegriff des Anspruchs 1 sowie ein Verkleidungselement.

Durch Benutzung sind Dichtungsanordnungen für Kraftfahrzeuge bekannt, welche zur Abdichtung einer beweglichen Fensterscheibe dienen. So werden beispielsweise an Fensterrahmen von Kraftfahrzeugtüren Dichtungsprofile vorgesehen, an welchen die Fensterscheibe dichtend anliegt. Zudem sind Verkleidungselemente wie beispielsweise Zierleisten bekannt, welche an einer Kraftfahrzeugtür oder einer Kraftfahrzeugkarosserie befestigt werden und als dekorative Elemente dienen.

Aufgabe der Erfindung ist es, eine Dichtungsanordnung für ein Kraftfahrzeug zu schaffen, welche eine besonders zuverlässige und optisch ansprechende Abdichtung ermöglicht.

Diese Aufgabe wird dadurch gelöst, dass das Verkleidungselement ein Dichtungselement umfasst, welches zur dichtenden Anlage an einer oberen Kante der beweglichen Fensterscheibe ausgebildet ist. Hierdurch wird eine unmittelbare Abdichtung zwischen der Fensterscheibe und dem Verkleidungselement an der Fahrzeugkarosserie ermöglicht, was eine besonders zuverlässige Abdichtung und zudem einen optisch ansprechenden, stufenlosen Übergang zwischen der Fensterscheibe und der Fahrzeugkarosserie ermöglicht.

Vorteilhaft steht das Dichtungselement von dem Verkleidungselement nach unten in Richtung der Fensterscheibe vor. Wird die Fensterscheibe nach oben in die Schließposition bewegt, gelangt die obere Kante der Fensterscheibe unmittelbar in Kontakt mit dem Dichtungselement und bildet den stufenlosen Übergang.

Weiter bevorzugt kann die Fensterscheibe in der oberen Schließposition an einem oberen Fensterrahmen vorbeigeführt sein, wenn die Fensterscheibe dichtend an dem Dichtungselement anliegt. Durch die Anordnung des oberen Fensterrahmens an der Innenseite der Fensterscheibe wird ein möglichst geringer Spalt zwischen der Fensterscheibe in der Schließposition und der angrenzenden Fahrzeugkarosserie erreicht.

An dem Fensterrahmen kann vorteilhaft eine Rahmendichtung vorgesehen sein, welche vorzugsweise mehrere Dichtlippen umfasst. Die Dichtlippen können zur Anlage an der Fensterscheibe ausgebildet sein, um gegenüber der Fensterscheibe abzudichten und die Fensterscheibe zu führen.

Das Verkleidungselement kann zudem über ein Befestigungsmittel, insbesondere über einen Halte-Clip, an der Fahrzeugkarosserie befestigt sein. Der Halte-Clip kann Spreizelemente aufweisen, welche in der montierten Position eine Aussparung in der Fahrzeugkarosserie haltend hintergreifen und hierdurch das Verkleidungselement an der Fahrzeugkarosserie befestigen. Alternativ können jedoch auch andere Befestigungsmittel wie beispielsweise eine Schraubverbindung vorgesehen sein.

In einer weiter vorteilhaften Ausführungsform kann das Verkleidungselement an der Fahrzeugkarosserie entlang einer Türaussparung geführt sein und/oder als Zierleiste ausgebildet sein. Beispielsweise kann das Verkleidungselement entlang des oberen Rands mindestens einer Türaussparung, geführt sein, vorzugsweise entlang des oberen Rand von Vorder- und Hintertür in Form einer Dachleiste.

Des Weiteren wird auch ein Verkleidungselement für die vorgenannte Dichtungsanordnung beansprucht, welches einen Grundkörper umfasst und dadurch gekennzeichnet ist, dass das Dichtungselement form- und/oder stoffschlüssig mit dem Grundkörper verbunden ist. Besonders vorteilhaft kann das Dichtungselement an dem Grundkörper anextrudiert sein, vorzugsweise mit einer Hohlkammer. Alternativ kann das Dichtungselement auch mit dem Grundkörper koextrudiert sein, beispielsweise wenn auch der Grundkörper aus einem Kunststoff mittels Extrusion gebildet wird.

In einer weiter vorteilhaften Ausführungsform kann der Grundkörper ein Profil aus Kunststoff und/oder Metall umfassen. Das Profil, welches in Längsrichtung vorteilhaft einen gleichbleibenden Querschnitt aufweist, kann beispielsweise durch Rollformen eines Metallblechs, durch Strangguss oder auch durch Extrusion eines Kunststoffs gebildet werden. Besonders vorteilhaft kann der Grundkörper ein Profil aus einem Metall enthalten, welches teilweise oder vollständig von einem Kunststoff umspritzt ist. Das Material des Dichtungselements ist vorzugsweise weicher ausgebildet als das Material des Profils bzw. des Grundkörpers, insbesondere wird das Dichtungselement aus einem EPDM-Material oder Moosgummi gebildet.

Um das Verkleidungselement besonders zuverlässig gegenüber der Fahrzeugkarosserie abstützen zu können, kann an dem Grundkörper mindestens eine Anlagelippe vorgesehen sein, welche in Richtung der Fahrzeugkarosserie vorsteht. Vorteilhaft sind jedoch mehrere Anlagelippen vorgesehen, insbesondere an freien Enden des Grundkörpers.

Zur Befestigung des Verkleidungselements an der Kraftfahrzeugkarosserie können an dem Grundkörper Aufnahmen für ein Befestigungsmittel, insbesondere für Befestigung-Clips, vorgesehen sein. Bei den Aufnahmen kann es sich vorzugsweise um Aussparungen oder hinterschnittene Hohlräume handeln, in welche das Befestigungsmittel haltend vorsteht.

Weitere Besonderheiten und Vorzüge der Erfindung ergeben sich aus der folgenden Beschreibung eines bevorzugten Ausführungsbeispiels anhand der Zeichnung.

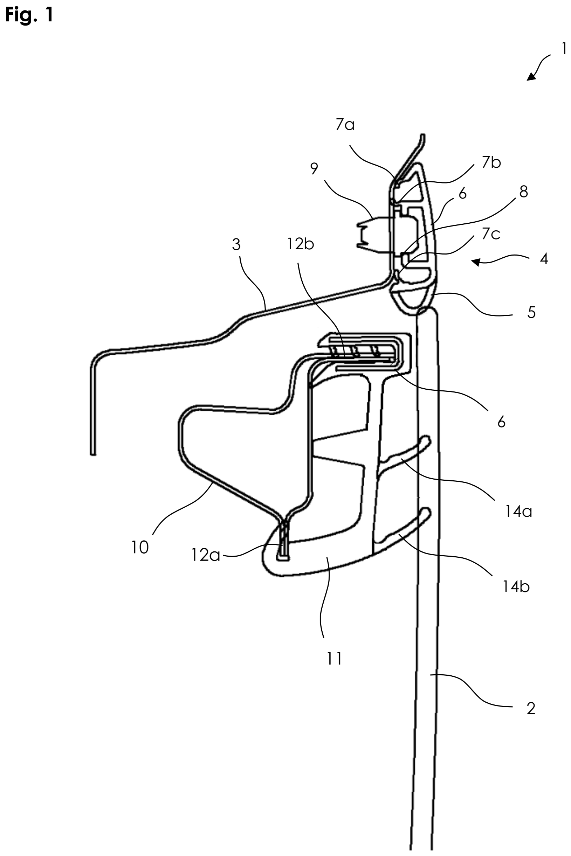

In Figur 1 ist eine Dichtungsanordnung 1 für ein Kraftfahrzeug gezeigt, welche eine bewegliche Fensterscheibe 2 und ein an einer Fahrzeugkarosserie 3 befestigtes Verkleidungselement 4 umfasst. Das Verkleidungselement 4, welches als Zierleiste ausgebildet ist, weist ein Dichtungselement 5 auf, welches zur Anlage an einer oberen Kante der beweglichen Fensterscheibe 2 vorgesehen ist. Wie aus der Darstellung zu entnehmen ist, wird hierdurch ein stufenloser Übergang zwischen der Fensterscheibe 2 und dem Verkleidungselement 4 bzw. einer Außenseite der Fahrzeugkarosserie 3 erreicht.

Das Dichtungselement 5 steht von dem Verkleidungselement 4 nach unten in Richtung der Fensterscheibe 2 vor und ist als Hohlkammer-Profil ausgebildet. Das Verkleidungselement 4 umfasst des Weiteren einen Grundkörper 6, mit welchem das Dichtungselement 5 stoffschlüssig verbunden ist. Hierzu kann das Dichtungselement 5 mit dem Grundkörper 6 verklebt oder an dem Grundkörper 6 anextrudiert werden. Wird der Grundkörper 6 aus einem Kunststoff mittels Extrusion hergestellt, können der Grundkörpers 6 und das Dichtungselement 5 auch durch Koextrusion in einem Arbeitsschritt hergestellt und miteinander verbunden werden. Alternativ kann der Grundkörpers 6 auch aus einem Metall, beispielsweise Aluminium oder Edelstahl, gebildet sein und beispielsweise mittels Stranggusses oder Rollumformen aus einem Blech hergestellt werden.

Für eine besonders gute Abstützung des Grundkörpers 6 an dem Blech der Fahrzeugkarosserie 3 sind an dem Grundkörper 6 mehrere Anlagelippen 7a, 7b, 7c vorgesehen, welche zur dichtenden Anlage an dem Blech der Fahrzeugkarosserie 3 ausgebildet sind. Vorzugsweise weist das Profil des Grundkörpers im Querschnitt mehrere freie Enden auf, an welchen die Anlagelippen 7a, 7b, 7c angeordnet sind.

Zur Befestigung des Verkleidungselements 4 an der Fahrzeugkarosserie 3 sind in dem Grundkörper 6 Aufnahmen in Form von Aussparungen vorgesehen, von welchen die Aussparung 8 gezeigt ist. Durch die Aussparung 8 steht ein Befestigungsmittel in Form eines Befestigung-Clip 9 vor und hintergreift die Aussparung 8 formschlüssig. Auf der gegenüberliegenden Seite steht der Befestigungs-Clip durch ein Loch in dem Blech der Fahrzeugkarosserie 3 vor und hintergreift dieses haltend mittels nicht bezifferter Spreizelemente.

Wie aus der Darstellung weiter zu entnehmen ist, ist die Fensterscheibe 2 in der oberen Schließposition an einem oberen Fensterrahmen 10 vorbeigeführt und liegt dichtend an dem Dichtungselement 5 an. Hierdurch wird ein optisch ansprechender, stufenloser kleiner Spalt zwischen der Fensterscheibe 2 und dem Verkleidungselement 4 bzw. der Außenseite der Fahrzeugkarosserie 3 erreicht. Zudem ist vorgesehen, dass das Verkleidungselement 4 in einer Vertiefung des Blechs der Fahrzeugkarosserie 3 angeordnet ist, sodass die angrenzende Außenseite der Fahrzeugkarosserie 3 bündig zu dem Verkleidungselement 4 positioniert ist.

An dem oberen Fensterrahmen 10 ist eine Rahmendichtung 11 vorgesehen, welche auf zwei vorstehende Flansche 12a, 12b des oberen Fensterrahmens 10 aufgesteckt ist. Für eine besonders stabile Fixierung der Rahmendichtung 11 an dem oberen Fensterrahmen 10 ist in der Rahmendichtung 11 ein Verstärkungselement 13 aus einem U-förmigen Metalleinleger vorgesehen, welches nicht bezifferte, nach innen vorstehende und seitlich an dem Flansch 12b haltend anliegende Haltelippen aufweist. Auf einer der Fensterscheibe 2 zugewandten Seite der Rahmendichtung 11 sind zudem zwei Dichtlippen 14a, 14b vorgesehen, welche zur dichtenden Anlage an der Fensterscheibe 2 ausgebildet sind.

Das Verkleidungselement 4 kann als Dachleiste an der Fahrzeugkarosserie entlang der Oberseite der vorderen und der hinteren Türaussparung geführt sein. Zudem kann an der Außenseite des Verkleidungselements 4 eine dekorative Oberfläche vorgesehen sein, beispielsweise aus einer Beschichtung wie Chrom, oder eine bearbeitete Oberfläche wie eine gebürstete Metalloberfläche, was die optische Erscheinungsform weiter verbessert.

### Bezugszeichenliste:

- 1: Dichtungsanordnung
- 2: Bewegliche Fensterscheibe
- 3: Fahrzeugkarosserie
- 4: Verkleidungselement
- 5: Dichtungselement
- 6: Grundkörper
- 7a, 7b, 7c: Anlagelippen
- 8: Aufnahme
- 9: Befestigungsmittel
- 10: Oberer Fensterrahmen
- 11: Rahmendichtung
- 12a, 12b: Flansche
- 13: Verstärkungselement
- 14a, 14b: Dichtlippen

## Patentansprüche

1. Dichtungsanordnung (1) für ein Kraftfahrzeug umfassend eine bewegliche Fensterscheibe (2) und ein an einer Fahrzeugkarosserie (3) befestigtes Verkleidungselement (4),
**dadurch gekennzeichnet,**
**dass** das Verkleidungselement (4) ein Dichtungselement (5) umfasst, welches zur dichtenden Anlage an einer oberen Kante der beweglichen Fensterscheibe (2) ausgebildet ist.

2. Dichtungsanordnung (1) nach Anspruch 1,
**dadurch gekennzeichnet,**
**dass** das Dichtungselement (5) von dem Verkleidungselement (4) nach unten in Richtung der Fensterscheibe (2) vorsteht.

3. Dichtungsanordnung (1) nach einem der vorhergehenden Ansprüche,
**dadurch gekennzeichnet,**
**dass** die Fensterscheibe (2) in der oberen Schließposition an einem oberen Fensterrahmen (10) vorbeigeführt ist und dichtend an dem Dichtungselement (5) anliegt.

4. Dichtungsanordnung (1) nach Anspruch 3,
**dadurch gekennzeichnet,**
**dass** an dem Fensterrahmen (10) eine Rahmendichtung (11) vorgesehen ist, welche vorzugsweise mehrere Dichtlippen (14a; 14b) umfasst.

5. Dichtungsanordnung (1) nach einem der vorhergehenden Ansprüche,
**dadurch gekennzeichnet,**
**dass** das Verkleidungselement (4) über ein Befestigungsmittel (9), insbesondere über einen Halte-clip, an der Fahrzeugkarosserie (3) befestigt ist.

6. Dichtungsanordnung (1) nach einem der vorhergehenden Ansprüche,
**dadurch gekennzeichnet,**
**dass** das Verkleidungselement (4) an der Fahrzeugkarosserie (3) entlang einer Türaussparung geführt ist und/oder als Zierleiste ausgebildet ist.

7. Dichtungsanordnung (1) nach einem der vorhergehenden Ansprüche,
**dadurch gekennzeichnet,**
**dass** das Verkleidungselement (4) nach einem der nachfolgenden Ansprüche ausgebildet ist.

8. Verkleidungselement (4) für eine Dichtungsanordnung (1) nach einem der vorhergehenden Ansprüche mit einem Grundkörper (6),
**gekennzeichnet durch**
ein Dichtungselement (5), welches form- und/oder stoffschlüssig mit dem Grundkörper (6) verbunden ist.

9. Verkleidungselement (4) nach Anspruch 8,
**dadurch gekennzeichnet,**
**dass** das Dichtungselement (5) an dem Grundkörper (6) anextrudiert ist, vorzugsweise mit einer Hohlkammer.

10. Verkleidungselement (4) nach Anspruch 8 oder 9,
**dadurch gekennzeichnet,**
**dass** der Grundkörper (6) ein Profil aus Kunststoff und/oder Metall umfasst.

11. Verkleidungselement (4) nach einem der Ansprüche 8 bis 10,
**dadurch gekennzeichnet,**
**dass** an dem Grundkörper (6) mindestens eine Anlagelippe (7a;7b; 7c) zur Abstützung des Grundkörpers (6) gegenüber einer Fahrzeugkarosserie (3) vorgesehen ist.

12. Verkleidungselement (4) nach einem der Ansprüche 8 bis 11,
**dadurch gekennzeichnet,**
**dass** an dem Grundkörper (6) Aufnahmen (8) für ein Befestigungsmittel (9), insbesondere für Befestigungs-Clips, vorgesehen sind.
